# FASCICULE DE BREVET EUROPEEN

(11) **EP 2 521 149 B1**
(45) Date de publication et mention de la délivrance du brevet: **27.12.2017**
(21) Numéro de dépôt: 12165426.3
(22) Date de dépôt: 25.04.2012
(51) Int. Cl.: H01H 9/02, H02B 1/46

(54) **Partie de boîtier électrique ou électronique comprenant un logement de télécommande**
Teil eines elektrischen oder elektronischen Schaltkastens, der eine Aussparung für eine Fernbedienung umfasst
Part of an electrical or electronic box including a remote control housing

(30) Priorité: 06.05.2011 FR 1153895
(43) Date de publication de la demande: 07.11.2012
(73) Titulaire: SOMFY ACTIVITES SA, 74300 Cluses (FR)
(72) Inventeur: Clerget, Sergyl, 74290 BLUFFY (FR); Bontaz, Jérémy, 74350 MENTHONNEX-EN-BORNES (FR); Cartier, Philippe, 74300 MAGLAND (FR)
(74) Mandataire: Novaimo

(56) Documents cités:
- DE-A1- 10 241 275
- DE-A1-102006 009 433
- DE-U1- 20 122 535
- FR-A1- 2 794 928
- US-A- 5 601 194

## Description

L'invention concerne un boîtier électrique ou électronique, destiné à recevoir un récepteur d'ordres et une unité de commande d'un équipement domotique de fermeture, d'occultation, de protection solaire, de confort, de sécurité ou d'écran. L'invention concerne encore un ensemble comprenant un tel boîtier et au moins une télécommande.

Comme dans de nombreuses industries, les fabricants d'équipements domotiques doivent emballer les produits domotiques qu'ils commercialisent. Or, les produits domotiques sont très souvent constitués de plusieurs éléments physiquement séparés, comme par exemple d'une part, un premier élément comprenant un motoréducteur, une unité de commande électronique du motoréducteur et un récepteur d'ordres radioélectrique et d'autre part, un deuxième élément comprenant un émetteur d'ordres ou une télécommande. Il s'ensuit que ce premier élément et ce deuxième élément doivent être conditionnés ou emballés séparément, éventuellement avant d'être conditionnés ou emballés dans un conditionnement commun. Ceci génère des coûts et génère également une consommation de matériau d'emballage nuisible à l'environnement.

Les documents FR2794928 et DE20122535 décrivent des dispositifs de support d'une télécommande d'un appareil domotique.

Les documents DE102006009433 et DE10241275 décrivent un boîtier destiné à contenir une télécommande afin de pouvoir suspendre celle-ci.

Le document US5601194 décrit un dispositif de stockage de plusieurs télécommandes.

Le but de l'invention est de fournir une partie de boîtier remédiant aux inconvénients mentionnés et améliorant les parties de boîtier connues de l'art antérieur. En particulier, l'invention se propose d'offrir une partie de boîtier permettant d'éviter le recours à l'utilisation d'emballage et de conditionnement lors de la commercialisation de produits domotiques de fermeture, d'occultation, de protection solaire ou d'écran.

Un boîtier selon l'invention est défini par la revendication 1.

Différents modes de réalisation du boîtier sont définis par les revendications 2 à 7.

Selon l'invention, un ensemble comprend :
- un boîtier défini précédemment, et
- au moins une télécommande mécaniquement liée une partie de boîtier ou au boîtier.

L'invention sera mieux comprise à la lecture de la description qui va suivre, donnée uniquement à titre d'exemple et faite en se référant aux dessins annexés sur lesquels :
La figure 1 est une vue en perspective d'un premier mode de réalisation d'un boîtier selon l'invention.
La figure 2 est une autre vue en perspective du premier mode de réalisation d'un boîtier selon l'invention.
La figure 3 est une vue en perspective d'un deuxième mode de réalisation d'un boîtier selon l'invention.
La figure 4 est une vue en perspective d'un troisième mode de réalisation d'un boîtier selon l'invention.
La figure 5 est une vue en perspective d'un capot du premier mode de réalisation du boîtier.
La figure 6 est une vue en perspective similaire à la figure 1, mais sur laquelle les télécommandes ne sont pas représentées.

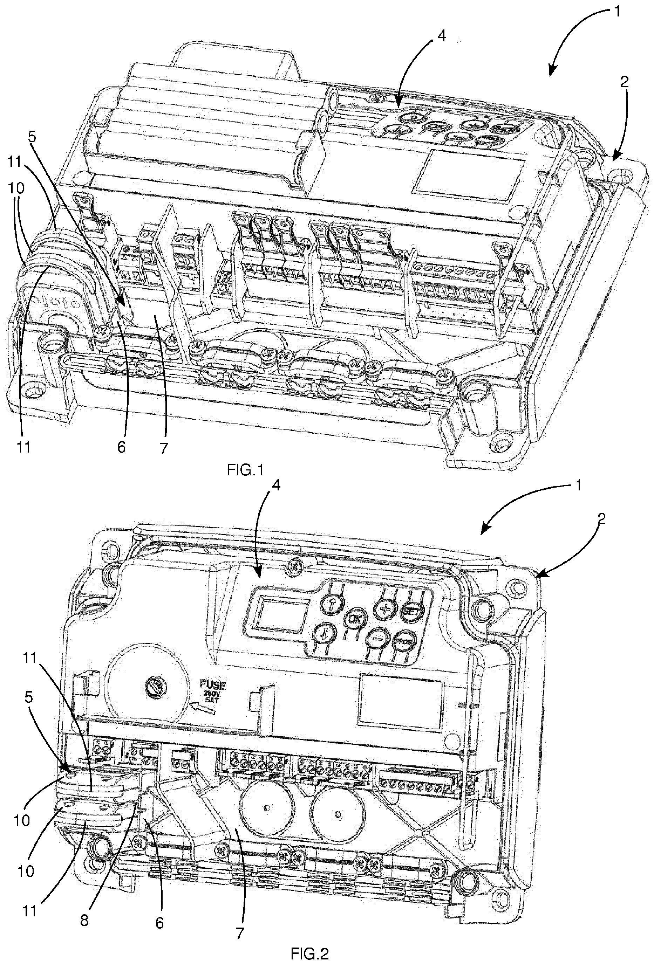

Un premier mode de réalisation d'un boîtier électrique ou électronique 1 selon l'invention est décrit ci-après en référence aux figures 1, 2, 5 et 6. Ce boîtier est destiné à être fixé sur une structure, notamment une structure de bâtiment, comme un mur, ou une structure d'enclos, notamment un pilier de clôture. Le boîtier est en outre destiné à renfermer une unité de commande et un récepteur d'ordres. L'unité de commande étant destinée à piloter un équipement domotique de fermeture, d'occultation, de protection solaire, de confort, de sécurité ou d'écran, comme un volet roulant, un store, une porte roulante, une porte basculante, une porte sectionnelle, un portail, équipés d'un actionneur électromécanique entraînant leur mouvement, une alarme, une ventilation, une climatisation, un chauffage.

Le boîtier 1 comprend une première partie de boîtier 2 et une deuxième partie de boîtier 3. La première partie de boîtier est destinée à être fixée sur la structure. La deuxième partie de boîtier est quant à elle destinée à coopérer avec la première partie de boîtier pour fermer le boîtier. Par exemple, la deuxième partie de boîtier est un couvercle ou un capot. Le récepteur d'ordres et l'unité de commande peuvent être réalisés sur une ou plusieurs cartes électroniques et contenus dans une unité 4. Cette unité 4 est par exemple montée sur un fond 20 de la première partie de boîtier et l'ensemble constitue la première partie de boîtier. L'unité peut être montée sur le fond par vissage. Par exemple, des vis 16 permettent ce montage de l'unité sur le fond. L'unité peut également présenter une interface homme-machine 14, notamment une interface homme-machine destinée à être utilisée lors de la configuration ou lors de la programmation de l'unité de commande. Cette interface comprend par exemple un écran et un clavier présentant une ou plusieurs touches. En outre, l'unité de commande peut permettre de commander ou piloter un équipement domotique sans utilisation d'une télécommande. A cet effet, un utilisateur peut agir sur l'interface homme-machine.

La première partie de boîtier, en particulier le fond, comprend des ouvertures 17, notamment des ouvertures oblongues, permettant le passage de moyens de fixation, comme des vis, permettant de fixer la première partie de boîtier sur la structure. Ainsi, la première partie de boîtier peut être fixée sur la structure par serrage de celle-ci contre la structure.

Le boîtier 1 électrique ou électronique est destiné à contenir un récepteur d'ordres et une unité de commande de l'équipement domotique de fermeture, d'occultation, de protection solaire, de confort, de sécurité ou d'écran. La première partie 2 du boîtier comprend un élément 5 de liaison mécanique à au moins une télécommande 10 destinée à communiquer avec le récepteur d'ordres, notamment au moins une télécommande sans fil, en particulier une télécommande sans fil destinée à communiquer par ondes électromagnétiques. En particulier, une télécommande permet d'envoyer un ordre de commande à l'unité de commande celui-ci étant reçu et interprété au niveau de l'unité de commande avant d'être transformé en un signal de commande envoyé de l'unité de commande à un équipement domotique commandé, notamment envoyé par voie filaire. L'élément de liaison mécanique permet de lier ou de solidariser mécaniquement la ou les télécommandes à la première partie de boîtier. Ainsi, lors du conditionnement du produit domotique, la ou les télécommandes sont liées ou solidarisées à la première partie de boîtier. Ceci permet d'éviter de devoir conditionner séparément du boîtier les télécommandes.

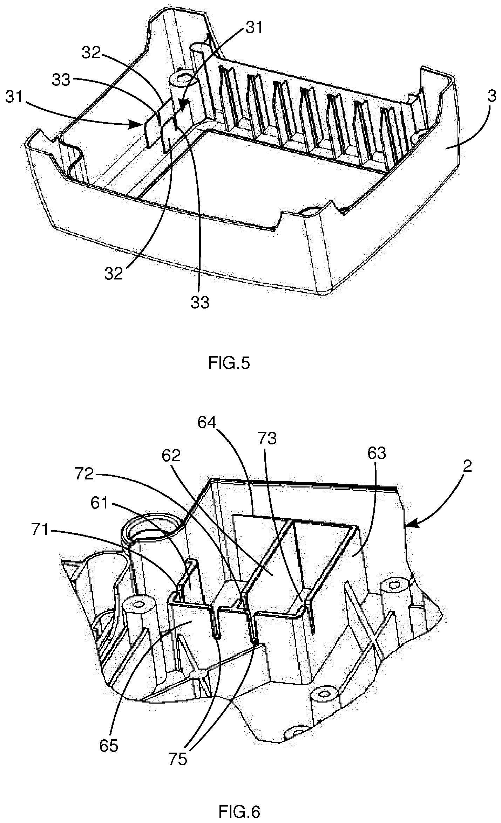

Dans le premier mode de réalisation, l'élément de liaison mécanique comprend un logement 6, voire plusieurs logements 6, destiné à recevoir la ou les télécommandes. Le logement ou les logements comprennent, par exemple comme représenté à la figure 6, des parois 61, 62, 63, 64, 65 entre lesquelles la ou les télécommandes sont destinées à être insérées de manière serrée. Par exemple, les parois s'étendent au moins sensiblement perpendiculairement au fond 20 de la première partie de boîtier. Par exemple, la paroi 61, la paroi 62, la paroi 64 et la paroi 65 définissent un premier logement destiné à recevoir une première télécommande et la paroi 63, la paroi 62, la paroi 64 et la paroi 65 définissent un deuxième logement destiné à recevoir une deuxième télécommande. Les télécommandes sont avantageusement serrées lorsqu'elles sont mises en place dans ces logements. Ainsi, on augmente les chances qu'elles restent en place même en cas de choc sur le boîtier, par exemple au cours du transport. Ce serrage peut être assuré par une déformation de la télécommande et/ou des parois lors de la mise en place d'une télécommande. Par exemple, pour permettre la déformation des parois, celles-ci peuvent comprendre des fentes. La paroi 61 peut comprendre une fente 71 et/ou la paroi 62 peut comprendre une fente 72 et/ou la paroi 63 peut comprendre une fente 73 et/ou la paroi 64 peut comprendre une ou deux fentes et/ou la paroi 65 peut comprendre une ou deux fentes 75. Ces fentes s'étendent par exemple au moins sensiblement parallèlement à la direction d'insertion de la ou les télécommandes. Dans le premier mode de réalisation, une télécommande peut être serrée, dans le premier logement, entre la paroi 61 et la paroi 62 et/ou peut être serrée, dans le premier logement, entre la paroi 64 et la paroi 65. De même, une télécommande peut être serrée, dans le deuxième logement, entre la paroi 63 et la paroi 62 et/ou peut être serrée, dans le premier logement, entre la paroi 64 et la paroi 65. Les fentes 75 autorisent la flexion ou l'écartement des parois 61 et 62 ou la flexion ou l'écartement des parois 62 et 63. De la même manière, les fentes 71, 72 et 73 autorisent la flexion ou l'écartement des parois 64 et 65. Alternativement, une télécommande peut être serrée, au moins sur un côté, contre une autre télécommande.

Éventuellement, de manière complémentaire, la deuxième partie de boîtier comprend un ou plusieurs éléments 31 de maintien de la ou des télécommandes dans l'élément de liaison mécanique, en particulier dans un logement. Ainsi, lorsque la deuxième partie de boîtier est montée sur la première partie, l'élément de maintien permet d'éviter toute possibilité de désolidarisation de la télécommande de la première partie de boîtier. L'élément de maintien peut en particulier permettre d'éviter toute possibilité de sortie de la télécommande du logement dans lequel elle se trouve.

Comme représenté à la figure 5, l'élément de maintien peut comprendre une lame 32 destinée à venir en appui contre la ou les télécommandes, en particulier contre au moins une boucle 11 de la ou des télécommandes. Cette lame est par exemple formée depuis le fond du capot ou du couvercle et s'étend au moins sensiblement perpendiculairement à celui-ci. De préférence encore, cette lame est flexible de sorte à permettre d'assurer un contact entre la lame et la télécommande lorsque la deuxième partie de boîtier est montée ou mise en place sur la première partie de boîtier. Cette flexibilité de la lame peut être assurée par le dimensionnement de la lame. Éventuellement, une fente 33 peut être réalisée dans la lame pour assurer cette flexibilité.

Il peut aussi exister un jeu entre l'élément de maintien et la ou les télécommandes, lorsque la deuxième partie est montée sur la première partie

Dans le premier mode de réalisation, l'élément de liaison mécanique de la ou des télécommandes au boîtier ou à la première partie de boîtier est situé à l'intérieur du boîtier.

Dans une variante de réalisation, l'élément de liaison mécanique de la ou des télécommandes au boîtier peut présenter des éléments de clippage sur la ou les télécommandes et/ou au niveau de l'élément de liaison mécanique, notamment dans le ou les logements.

Un avantage de ce mode de réalisation est de permettre un rangement de la ou des télécommandes sans impact sur le format extérieur du boîtier. Autrement dit, aucune forme particulière de l'emballage ne doit être prévue spécifiquement pour la ou les télécommandes en dehors de l'emballage du boîtier lui-même.

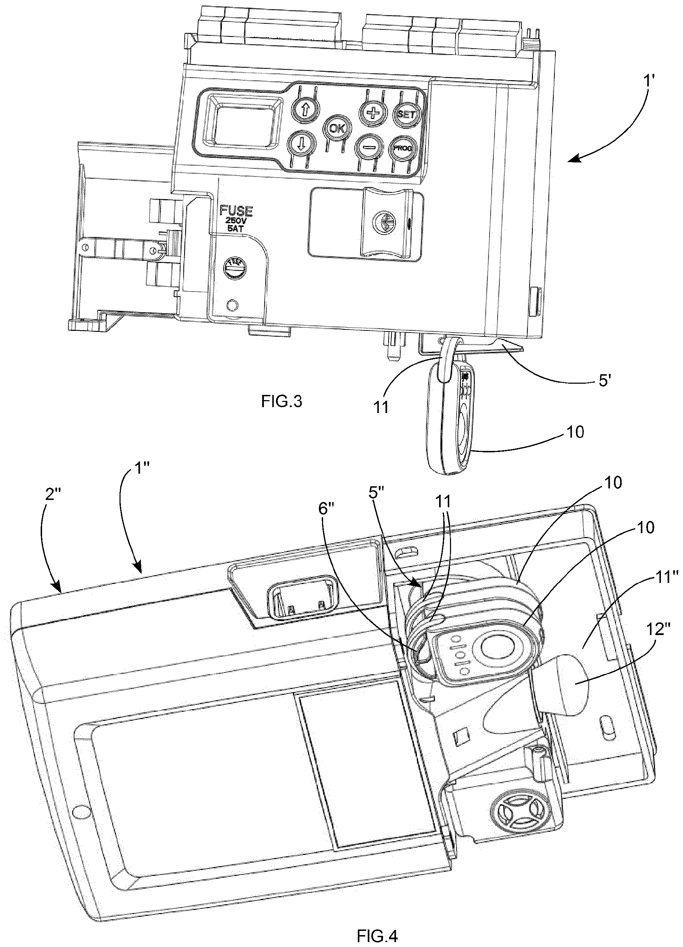

Un deuxième mode de réalisation d'un boîtier électrique ou électronique 1' selon l'invention est décrit ci-après en référence à la figure 3. Ce boîtier est destiné à être fixé sur une structure, notamment une structure de bâtiment, comme un mur, ou une structure d'enclos, notamment un pilier de clôture. En particulier, le boîtier est destiné à être rapporté sur un actionneur. Le boîtier est en outre destiné à renfermer une unité de commande et un récepteur d'ordres. L'unité de commande étant destinée à piloter un équipement domotique de fermeture, d'occultation, de protection solaire, de confort, de sécurité ou d'écran, notamment un portail.

Ce deuxième mode de réalisation de boîtier diffère principalement du premier mode de réalisation en ce que l'élément 5' de liaison mécanique de la ou les télécommandes au boîtier est situé à l'extérieur du boîtier. Par ailleurs, l'élément de liaison mécanique comprend un élément d'accrochage 5', comme un crochet, notamment un élément d'accrochage destiné à coopérer avec une boucle 11 prévue sur la ou les télécommandes. Le crochet peut comprendre un organe flexible fixé au boîtier à l'une de ses extrémités et rappelé contre le boîtier à l'autre de ses extrémités. En particulier, une ou plusieurs aspérités de blocage peuvent être prévue pour bloquer ou limiter le glissement latéral des télécommandes le long du crochet. Le boîtier peut comprendre plusieurs crochets de ce type pour lier mécaniquement plusieurs télécommandes au boîtier ou un crochet apte à coopérer avec plusieurs télécommandes pour lier mécaniquement plusieurs télécommandes au boîtier.

Un avantage de ce mode de réalisation est le suivant : le crochet peut être utilisé pour le transport mais également lors du montage ou de la maintenance de l'équipement. Il permet de ranger les télécommandes en lieu sûr sans nécessairement que le boîtier ne soit ouvert.

Un troisième mode de réalisation d'un boîtier électrique ou électronique 1" selon l'invention est décrit ci-après en référence à la figure 4. Ce boîtier est destiné à être fixé sur une structure, notamment une structure de bâtiment, comme un mur, ou une structure d'enclos, notamment un pilier de clôture. En particulier, le boîtier est destiné à être rapporté sur un actionneur. Le boîtier est en outre destiné à renfermer une unité de commande et un récepteur d'ordres. L'unité de commande étant destinée à piloter un équipement domotique de fermeture, d'occultation, de protection solaire, de confort, de sécurité ou d'écran, notamment une porte de garage.

Ce troisième mode de réalisation de boîtier diffère principalement du premier mode de réalisation en ce que l'élément 5" de liaison mécanique de la ou les télécommandes à la première partie 2" de boîtier comprend un élément de positionnement 6" de la ou les télécommandes.

Cet élément de positionnement peut comprendre un organe de positionnement s'étendant au moins sensiblement perpendiculairement à un fond de la première partie de boîtier. De préférence, cet organe de positionnement est agencé et conformé de sorte à pouvoir passer dans une ouverture prévue sur la ou les télécommandes, comme par exemple une boucle 11 de télécommande. De préférence, au moins une télécommande, par exemple deux télécommandes, peuvent être enfilées sur cet organe de positionnement. Alternativement, plusieurs organes de positionnement peuvent être prévus pour recevoir ou positionner, chacun, une ou plusieurs télécommandes.

L'organe de positionnement est par exemple disposé au niveau d'une zone 11" dans laquelle il est prévu de mettre en place une ampoule 12" d'éclairage permettant d'assurer un éclairage du local dans lequel le boîtier est disposé. Dans ce cas, la deuxième partie de boîtier est de préférence réalisée en matériau transparent ou translucide, au moins au niveau de cette zone 11 ". Par ailleurs, comme dans le premier mode de réalisation, de manière complémentaire, la deuxième partie de boîtier peut comprendre un élément de maintien de la ou les télécommandes en coopération avec l'élément de liaison mécanique. Ainsi, lorsque la deuxième partie de boîtier est montée sur la première partie, l'élément de maintien permet d'éviter toute possibilité de désolidarisation de la télécommande de la première partie de boîtier. L'élément de maintien peut en particulier permettre d'éviter toute possibilité de sortie de la télécommande du logement dans lequel elle se trouve.

L'élément de maintien peut comprendre une lame 32 destinée à venir en appui contre la ou les télécommandes. Cette lame est par exemple formée depuis le fond du capot ou du couvercle et s'étend au moins sensiblement perpendiculairement à celui-ci. De préférence encore, cette lame est flexible de sorte à permettre d'assurer un contact entre la lame et la télécommande lorsque la deuxième partie de boîtier est montée ou mise en place sur la première partie de boîtier. Cette flexibilité de la lame peut être assurée par le dimensionnement de la lame. Éventuellement, une fente peut être réalisée dans la lame pour assurer cette flexibilité. Alternativement, l'élément de maintien peut comprendre une face de la deuxième partie, notamment son fond, destinée à venir en appui contre la ou les télécommandes. Il peut aussi exister un jeu entre cet élément de maintien et la ou les télécommandes, lorsque la deuxième partie est montée sur la première partie.

Dans ce troisième mode de réalisation, l'élément de liaison mécanique de la ou les télécommandes au boîtier ou à la première partie de boîtier est situé à l'intérieur du boîtier. Il présente les mêmes avantages que le premier mode de réalisation.

L'invention porte aussi sur un ensemble comprenant :
- un boîtier 1 ; 1' ; 1" décrit précédemment, et
- au moins une télécommande 10 mécaniquement liée à la partie de boîtier ou au boîtier, la ou les télécommandes étant notamment liée à la partie de boîtier ou au boîtier alors que le boîtier se trouve dans son emballage ou son conditionnement final, c'est-à-dire dans l'emballage ou le conditionnement dans lequel il est présenté à l'installateur ou au consommateur final.

Dans les différents modes de réalisation, la première partie de boîtier et/ou la deuxième partie de boîtier sont de préférence réalisées en matière plastique.

L'invention permet d'éviter de devoir conditionner séparément du boîtier les télécommandes. Ainsi, les coûts de conditionnement et la consommation d'emballage sont diminués. Par ailleurs, juste après l'installation des produits domotiques, il y avait jusqu'à maintenant un problème : on ne savait pas quoi faire des télécommandes, en particulier l'installateur ne savait pas où laisser les télécommandes à la fin de l'installation afin que l'utilisateur puisse les retrouver aisément. Grâce à l'invention, l'installateur n'a plus qu'à lier à nouveau les télécommandes à la première partie de boîtier ou au boîtier après installation. Il n'y a donc plus de risque d'égarement des télécommandes.

Dans tout ce document, par « au moins sensiblement perpendiculaire », on entend « perpendiculaire » ou « sensiblement perpendiculaire ». De même, par « au moins sensiblement parallèle », on entend « parallèle » ou « sensiblement parallèle ».

## Revendications

1. Boîtier (1 ; 1'; 1 ") électronique de commande d'un équipement domotique de fermeture, d'occultation, de protection solaire, de confort, de sécurité ou d'écran, comprenant une première partie (2 ; 2") de boîtier contenant un récepteur d'ordres et une unité de commande dudit équipement, le récepteur d'ordres et l'unité de commande étant réalisés sur une ou plusieurs cartes électroniques et contenus dans une unité (4) montée sur un fond (20) de la première partie de boîtier, le boîtier comprenant une deuxième partie (3) sous forme de capot destiné à coopérer avec la première partie et à refermer le boîtier, la première partie de boîtier comprenant un élément (5 ; 5' ; 5") de liaison mécanique à au moins une télécommande (10) destinée à communiquer avec le récepteur d'ordres, l'élément de liaison mécanique permettant de lier ou de solidariser mécaniquement la ou les télécommandes à la première partie de boîtier, l'élément de liaison mécanique comprenant un logement (6) et la deuxième partie comprenant un élément (31) de maintien de la ou les télécommandes dans le logement lorsque la deuxième partie de boîtier est montée sur la première partie de boîtier.

2. Boîtier selon la revendication précédente, **caractérisé en ce que** le logement comprend des parois (61, 62, 63, 64, 65) entre lesquelles la ou les télécommandes est destinée à être insérée de manière serrée.

3. Boîtier selon la revendication précédente, **caractérisé en ce qu'**au moins certaines parois comprennent des fentes (71, 72, 73, 74, 75) s'étendant au moins sensiblement parallèlement à la direction d'insertion de la ou les télécommandes.

4. Boîtier selon l'une des revendications précédentes, **caractérisé en ce que** l'élément de liaison mécanique comprend un élément de positionnement (6") de la ou les télécommandes.

5. Boîtier selon l'une des revendications précédentes, **caractérisé en ce que** l'élément de liaison mécanique comprend un élément d'accrochage (5'), comme un crochet, notamment un élément d'accrochage destiné à coopérer avec une boucle (11) prévue sur la ou les télécommandes.

6. Boîtier selon l'une des revendications précédentes, **caractérisé en ce que** l'élément de maintien comprend une lame (32) destinée à venir en appui contre la ou les télécommandes, en particulier contre au moins une boucle de la ou les télécommandes.

7. Boîtier selon l'une des revendications précédentes, **caractérisé en ce que** l'élément de maintien comprend une face de la deuxième partie destinée à venir en appui contre la ou les télécommandes.

8. Ensemble comprenant :
- un boîtier (1 ; 1' ; 1 ") selon l'une des revendications 1 à 7, et
- au moins une télécommande (10) mécaniquement liée à une partie de boîtier ou au boîtier.

## Patentansprüche

1. Elektronischer Schaltkasten (1; 1'; 1") zur Steuerung einer haustechnischen Schließ-, Verdunklungs-, Sonnenschutz-, Komfort-, Sicherheits- oder Schirmeinrichtung, welcher einen ersten Schaltkastenteil (2; 2") umfasst, der einen Befehlsempfänger und eine Einheit zur Steuerung der Einrichtung enthält, wobei der Befehlsempfänger und die Steuereinheit auf einer oder mehreren Leiterplatten realisiert sind und in einer Einheit (4) enthalten sind, die auf einem Boden (20) des ersten Schaltkastenteils angebracht ist, wobei der Schaltkasten einen zweiten Teil (3) in Form einer Abdeckhaube umfasst, die dazu bestimmt ist, mit dem ersten Teil zusammenzuwirken und den Schaltkasten zu verschließen, wobei der erste Schaltkastenteil ein Element (5; 5'; 5") zur mechanischen Verbindung mit wenigstens einer Fernbedienung (10) umfasst, die dazu bestimmt ist, mit dem Befehlsempfänger zu kommunizieren, wobei das mechanische Verbindungselement ermöglicht, die Fernbedienung oder die Fernbedienungen mechanisch mit dem ersten Schaltkastenteil zu verbinden oder an ihm zu befestigen, wobei das mechanische Verbindungselement eine Aufnahme (6) umfasst und der zweite Teil ein Element (31) zu Halten der Fernbedienung oder der Fernbedienungen in der Aufnahme, wenn der zweite Schaltkastenteil auf dem ersten Schaltkastenteil angebracht ist, umfasst.

2. Schaltkasten nach dem vorhergehenden Anspruch, **dadurch gekennzeichnet, dass** die Aufnahme Wände (61, 62, 63, 64, 65) umfasst, die dazu bestimmt sind, dass zwischen ihnen die Fernbedienung oder die Fernbedienungen straff eingesetzt wird bzw. werden.

3. Schaltkasten nach dem vorhergehenden Anspruch, **dadurch gekennzeichnet, dass** wenigstens einige Wände Schlitze (71, 72, 73, 74, 75) umfassen, die sich wenigstens im Wesentlichen parallel zur Richtung des Einsetzens der Fernbedienung oder der Fernbedienungen erstrecken.

4. Schaltkasten nach einem der vorhergehenden Ansprüche, **dadurch gekennzeichnet, dass** das mechanische Verbindungselement ein Element zur Positionierung (6") der Fernbedienung oder der Fernbedienungen umfasst.

5. Schaltkasten nach einem der vorhergehenden Ansprüche, **dadurch gekennzeichnet, dass** das mechanische Verbindungselement ein Einhängeelement (5'), wie einen Haken, umfasst, insbesondere ein Einhängeelement, das dazu bestimmt ist, mit einer Öse (11) zusammenzuwirken, die an der oder den Fernbedienungen vorgesehen ist.

6. Schaltkasten nach einem der vorhergehenden Ansprüche, **dadurch gekennzeichnet, dass** das Halteelement ein Plättchen (32) umfasst, das dazu bestimmt ist, an der oder den Fernbedienungen zur Anlage zu kommen, insbesondere an wenigstens einer Öse der Fernbedienung oder der Fernbedienungen.

7. Schaltkasten nach einem der vorhergehenden Ansprüche, **dadurch gekennzeichnet, dass** das Halteelement eine Seite des zweiten Teils umfasst, die dazu bestimmt ist, an der oder den Fernbedienungen zur Anlage zu kommen.

8. Anordnung, welche umfasst:
- einen Schaltkasten (1; 1'; 1") nach einem der Ansprüche 1 bis 7, und
- wenigstens eine Fernbedienung (10), die mit einem Schaltkastenteil oder mit dem Schaltkasten mechanisch verbunden ist.

## Claims

1. Electronic control casing (1; 1'; 1") of a home automation closure, blanking, solar protection, comfort, security or screening equipment item, comprising a first casing part (2; 2") containing a receiver of commands and a control unit of said equipment item, the receiver of commands and the control unit being produced on one or more electronic circuit boards and contained in a unit (4) mounted on a bottom (20) of the first casing part, the casing comprising a second part (3) in the form of a cap intended to cooperate with the first part and to close the casing, the first casing part comprising a mechanical link element (5; 5'; 5") for linking to at least one remote control (10) intended to communicate with the receiver of commands, the mechanical link element making it possible to mechanically link or secure the remote control(s) to the first casing part, the mechanical link element comprising a housing (6) and the second part comprising a holding element (31) for holding the remote control(s) in the housing when the second casing part is mounted on the first casing part.

2. Casing according to the preceding claim, **characterized in that** the housing comprises walls (61, 62, 63, 64, 65) between which the remote control(s) is (are) intended to be tightly inserted.

3. Casing according to the preceding claim, **characterized in that** at least some walls comprise slits (71, 72, 73, 74, 75) extending at least substantially parallel to the direction of insertion of the remote control(s).

4. Casing according to one of the preceding claims, **characterized in that** the mechanical link element comprises a positioning element (6") for positioning the remote control(s).

5. Casing according to one of the preceding claims, **characterized in that** the mechanical link element comprises an attachment element (5'), like a hook, in particular an attachment element intended to cooperate with a loop (11) provided on the remote control(s).

6. Casing according to one of the preceding claims, **characterized in that** the holding element comprises a blade (32) intended to come to bear against the remote control(s), in particular against at least one loop of the remote control(s).

7. Casing according to one of the preceding claims, **characterized in that** the holding element comprises a face of the second part intended to come to bear against the remote control(s).

8. Assembly comprising:
- a casing (1; 1'; 1") according to one of Claims 1 to 7, and
- at least one remote control (10) mechanically linked to a casing part or to the casing.
